# EUROPEAN PATENT APPLICATION

(11) **EP 3 246 242 A1**
(43) Date of publication of application: **22.11.2017**
(21) Application number: 17171549.3
(22) Date of filing: 17.05.2017
(51) Int. Cl.: B63C 11/16

(54) **DIVING AND SNORKELING MASK STRUCTURE**

(30) Priority: 18.05.2016 US 201662337916 P; 21.10.2016 US 201662410896 P; 15.11.2016 US 201662422121 P
(71) Applicant: Qbas Co., Ltd., Taipei (TW)
(72) Inventor: SHIUE, Chih-Cheng, Taipei (TW)
(74) Representative: Sticht, Andreas

(57) **Abstract**

A diving and snorkeling mask structure including a full face mask, a frame, at least one lens, a joint, a respiratory tube and at least one securing belt is disclosed. The full face mask includes a first soft material region connected with a second soft material region. The frame is combined with the second soft material region of the full face mask. The at least one lens is disposed in the frame. The joint is disposed on the full face mask, and adjacent to the upper side of the frame. The respiratory tube is disposed on the joint, and establishes the air communication with the full face mask via the joint. The at least one securing belt includes a side buckle element to snap fit the full face mask.

**Names of Elements of Representative Figure:**

10
diving and snorkeling mask structure
110
full face mask
111
first soft region
112
second soft region
120
frame
130
lens
140
joint
150
respiratory tube
160
securing belt

## Description

### Field of the Invention

The present invention relates to a mask structure, and more particularly, to a diving and snorkeling mask structure adapted to snorkeling or diving sports.

### Descriptions of the Related Art

A full face goggle mask currently available tends to cause a considerable compression pressure onto a user's face when actually being worn. Particularly when the user dives under the water, the pressure imposed onto the user's face by the full face goggle mask will increase as the underwater depth increases, thereby causing discomfort to the user.

Moreover, this kind of full face goggle masks appear to have a large area of transparent lens, but the visual range thereof is very limited during the actual use due to the special design of a frame structure thereof, which disenables the user to have a sufficient field of vision when wearing the mask underwater.

Additionally, a mask and a respiratory tube included in the full face goggle mask currently available are independently disposed components, so the mask and the respiratory tube are likely to be lost because they need to be stored or carried separately.

Accordingly, an urgent need exists in the art to provide a diving and snorkeling mask structure to improve the aforesaid drawbacks.

### Content of the Invention

An objective of the present invention is to provide a diving and snorkeling mask structure, which can improve the comfort level in use while fully covering a user's face.

Another objective of the present invention is to provide a diving and snorkeling mask structure provided with an elastic head strap, which can improve the comfort level in use and facilitate the putting on and the taking off of the mask.

Yet another objective of the present invention is to provide a diving and snorkeling mask structure, a respiratory tube of which is combined with the body of the mask in a bendable manner and thus is convenient to carry.

To achieve the aforesaid objectives, a diving and snorkeling mask structure disclosed in the present invention comprises a full face mask, a frame, at least one lens, a joint, a respiratory tube and at least one securing belt. The full face mask comprises a first soft material region and a second soft material region connected with each other. The frame is combined with the second soft material region of the full face mask. The at least one lens is disposed in the frame. The joint is disposed on the full face mask and adjacent to the upper side of the frame. The respiratory tube is disposed on the joint and establishes the air communication with the full face mask via the joint. The at least one securing belt comprises a side buckle element adapted to snap fit the full face mask.

To achieve the aforesaid objectives, the soft material of the first soft material region has a hardness smaller than that of the soft material of the second soft material region in the diving and snorkeling mask structure of the present invention.

To achieve the aforesaid objectives, a total area of the first soft material region and the second soft material region is larger than a half of a viewing window area of the at least one lens in the diving and snorkeling mask structure of the present invention.

To achieve the aforesaid objectives, the first soft material region and the second soft material region are of a same material in the diving and snorkeling mask structure of the present invention.

To achieve the aforesaid objectives, the diving and snorkeling mask structure of the present invention further comprises a water draining valve disposed at a lower end of the full face mask and adjacent to the user's mouth.

To achieve the aforesaid objectives, the diving and snorkeling mask structure of the present invention further comprises a latching device, wherein the latching device has a latch and a groove engaged with each other, and the latch and the groove are disposed on the joint and the frame respectively.

To achieve the aforesaid objectives, the diving and snorkeling mask structure of the present invention further comprises an external hard frame disposed around the full face mask.

To achieve the aforesaid objectives, at least one elastic head strap is disposed on the external hard frame in the diving and snorkeling mask structure of the present invention.

To achieve the aforesaid objectives, an auxiliary device, e.g., a fixing mechanism for fixing a miniature video camera, is disposed on the external hard frame in the diving and snorkeling mask structure of the present invention.

To achieve the aforesaid objectives, the side buckle element in the diving and snorkeling mask structure of the present invention snap fits the full face mask in the form of a quick-release buckle.

To achieve the aforesaid objectives, the elastic head strap of the diving and snorkeling mask structure of the present invention has at least one latch.

To achieve the aforesaid objectives, the diving and snorkeling mask structure of the present invention further comprises a top cover which is disposed on the respiratory tube and having a protrusion; the respiratory tube further comprises a seal ring, and the protrusion may abut against the seal ring.

To achieve the aforesaid objectives, the auxiliary device of the diving and snorkeling mask structure of the present invention is provided with a miniature video camera.

Accordingly, the diving and snorkeling mask structure of the present invention at least can provide the following benefits: the goggle mask made of soft materials is convenient to carry and improves the comfort level in use; the design of the viewing window with a large area can increase the field of vision of the user; the arrangement of the latching device can prevent the respiratory tube from being bent due to the pressure during the diving; the design of the external hard frame can stabilize the diving and snorkeling mask structure; and the design of the elastic head strap can stabilize the diving and snorkeling mask structure and facilitate the putting on and the taking off of the diving and snorkeling mask structure.

The detailed technology and preferred embodiments implemented for the subject invention are described in the following paragraphs accompanying the appended drawings for people skilled in this field to well appreciate the features of the claimed invention.

### Brief Description of the Drawings

**FIG. 1** is a schematic view of a diving and snorkeling mask structure according to a first embodiment of the present invention;
**FIG. 2** is a front view of the diving and snorkeling mask structure according to the first embodiment of the present invention;
**FIG. 3** is a schematic view illustrating the joining of a mask and a securing belt in the diving and snorkeling mask structure according to the first embodiment of the present invention;
**FIG. 4** is a schematic view illustrating a part of a face-contacting area of the mask in the diving and snorkeling mask structure according to the first embodiment of the present invention;
**FIG. 5A** is a simplified schematic view of the diving and snorkeling mask structure according to the first embodiment of the present invention when being viewed from the back side;
**FIG. 5B** is a cross-sectional view of the diving and snorkeling mask structure of **FIG. 5A**;
**FIG. 6A** and **FIG. 6B** are schematic views illustrating how to achieve ear pressure balance by using the diving and snorkeling mask structure according to the first embodiment of the present invention;
**FIG. 7** is a schematic view of a latching device of the diving and snorkeling mask structure according to the first embodiment of the present invention;
**FIG. 8** is a schematic view of the latching device of the diving and snorkeling mask structure according to the first embodiment of the present invention in a bent status;
**FIG. 9** is a schematic view illustrating a respiratory tube, in the diving and snorkeling mask structure according to the first embodiment of the present invention, that is connected to a lens via a joint in the form of a hose and in a bent status;
**FIG. 10A** is a schematic view illustrating an end of the respiratory tube in the diving and snorkeling mask structure according to the first embodiment of the present invention;
**FIG. 10B** is a schematic view illustrating the end of the respiratory tube in an air-tight status in the diving and snorkeling mask structure according to the first embodiment of the present invention;
**FIG. 11** is a front view of a diving and snorkeling mask structure according to a second embodiment of the present invention;
**FIG. 12** is a schematic view of the diving and snorkeling mask structure according to the second embodiment of the present invention;
**FIG. 13A** is a schematic view illustrating a securing belt (an elastic head strap) engaged with a full face mask in the diving and snorkeling mask structure according to the second embodiment of the present invention;
**FIG. 13B** is a schematic view of the securing belt (the elastic head strap) of the diving and snorkeling mask structure according to the second embodiment of the present invention;
**FIG. 14** is a front view of a diving and snorkeling mask structure according to a third embodiment of the present invention;
**FIG. 15** is a rear view of the diving and snorkeling mask structure according to the third embodiment of the present invention;
**FIG. 16** is an exploded view of the diving and snorkeling mask structure according to the third embodiment of the present invention;
**FIG. 17** is a partial combined view of the diving and snorkeling mask structure according to the third embodiment of the present invention;
**FIG. 18** is a schematic view of the diving and snorkeling mask structure according to the third embodiment of the present invention; and
**FIG. 19** is a bottom view of **FIG. 18****.**

### Description of the Preferred Embodiment

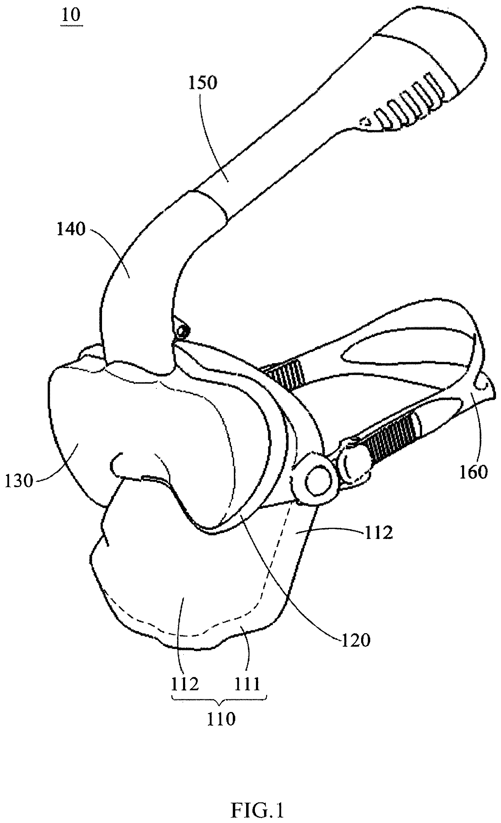

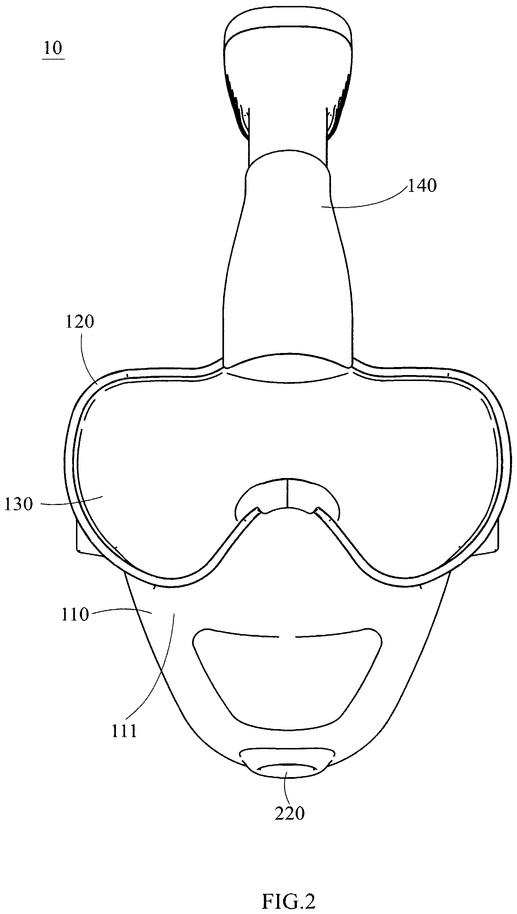

As shown in **FIG. 1** and **FIG. 2**, a diving and snorkeling mask structure **10** of the present invention is adapted to be worn on a user's head during a diving sport for performing underwater activities. The diving and snorkeling mask structure **10** may structurally comprise a full face mask **110**, a frame **120**, a lens **130**, a joint **140**, a respiratory tube **150** and a securing belt **160**, and technical contents of these elements are as follows.

First, the full face mask **110** of the present invention is of a complete soft material design, and it consists of a first soft region **111** and a second soft region **112** connected with each other. The first soft material region **111** is a part of the full face mask **110** that makes contact with the user's face when the mask is being worn, and the second soft material region **112** is the remaining part of the full face mask **110** that does not make contact with the user's face. The frame **120** is combined with the first soft material region **111** of the full face mask **110.** The lens **130** may be made of a transparent thermoplastic, or glass, or glass overmolded by a thermoplastic, and it is disposed in the frame **120** by assembling or overmolding. The lens **130** is surrounded by the frame **120** in appearance.

It shall be appreciated that, in the embodiment shown in **FIG. 1** and **FIG. 2**, the lens **130** is a single lens, but it is not limited thereto. In other words, the lens **130** may also be two lenses; and in case of two lenses, a corrective lens may be used in combination with the lens **130** depending on the user's needs to satisfy special requirements of short-sighted or long-sighted users.

The joint **140** is disposed above the full face mask **110.** That is, the joint **140** is disposed above the lens **130** and is in communication with the space defined by the lens **130.** Because the frame **120** surrounds the lens **130**, the joint **140** may also be interpreted as disposed or connected above the frame **120** in appearance. The respiratory tube **150** and the joint **140** are disposed on the lens **130** in a bendable manner, and the respiratory tube **150** is in communication with the full face mask **110** via the joint **140.** That is, the respiratory tube **150** is in communication with the space defined by the lens **130** via the joint **140** to achieve the purpose of air communication.

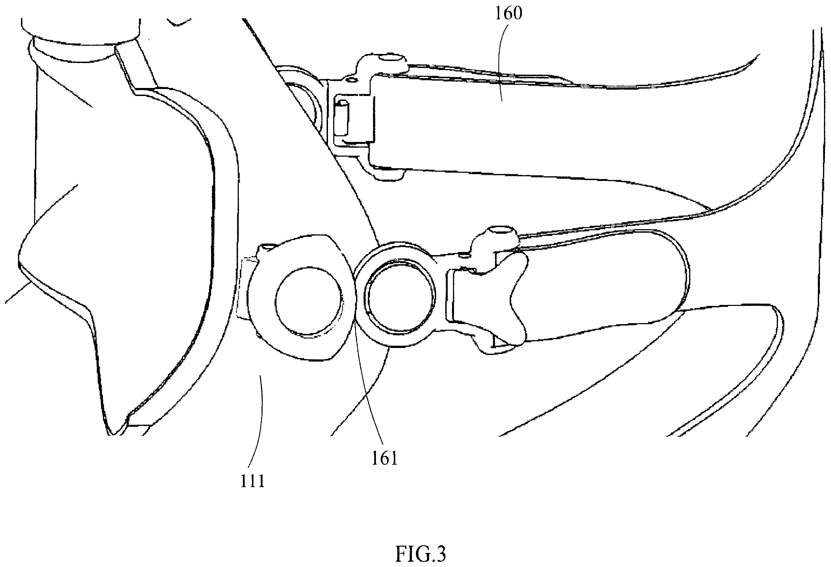

**FIG. 3** is a schematic view illustrating the joining of the full face mask **110** and the securing belt **160** in the diving and snorkeling mask structure **10** according to the present invention. The securing belt **160** comprises a side buckle element **161**, and in this embodiment, the securing belt **160** snap fits the first soft material region **111** of the full face mask **110** via the side buckle element **161** in the form of a quick-release buckle so as to be worn on the user's head. Apart from being disposed on the full face mask **110**, the aforesaid side buckle element **161** may also be installed on the frame **120.**

Apart from joining through the quick-release buckle as described in this embodiment, the securing belt **160** may also be joined to the full face mask **110** via other buckling manners, and no limitation is made thereto. Additionally, the side buckle element **161** of this embodiment is circular, but the side buckle element **161** may also be of any other shape, e.g., a rectangle, a triangle or the like, in other embodiments, and no limitation is made thereto.

What described above is the relative positional distribution among the main elements of the diving and snorkeling mask structure **10**, and detailed technical contents of the elements will be described in detail hereinafter.

The first soft material region **111** is the region that makes contact with the user's face when the diving and snorkeling mask structure **10** is being worn, and the second soft-material region **112** is disposed on the other side opposite to the user's cheek where structures such as the frame **120**, the lens **130**, and the securing belt **160** are to be installed. In this embodiment, a soft material used for the first soft-material region **111** is relatively softer, while a soft material used for the second soft-material region **112** is relatively harder. Preferably, the soft material of the first soft material region **111** has a hardness of Shore A 30∼60, while the soft material of the second soft material region **112** has a hardness of Shore A 60∼90.

Moreover, although the first soft material region **111** and the second soft material region **112** of this embodiment are made of different soft materials and have different hardness, the first soft material region **111** and the second soft material region **112** may also be made of the same material having the same hardness in the present invention, and a comfortable wearing experience is provided for the user by varying the thickness of the two soft material regions (e.g., by making the first soft material region **111** thinner than the second soft material region **112**).

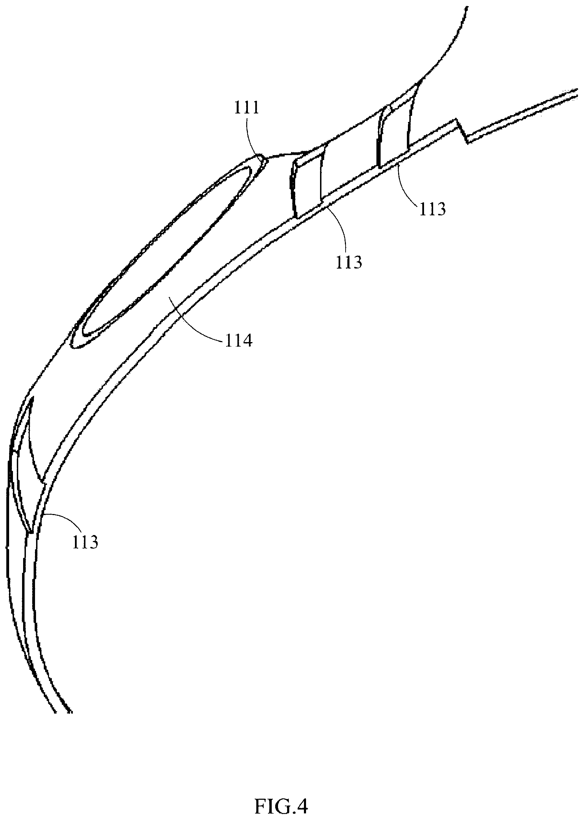

**FIG.** 4 is a schematic view illustrating a part of a face-contacting area of the full face mask **110** in the diving and snorkeling mask structure **10** according to the present invention. In the aspect shown in **FIG. 4**, in order to have the first soft material region **111** of the full face mask **110** adapt to different face profiles and thus provide a tight-fit effect when the full face mask **110** is being worn, thickness of the first soft material may be varied at specific locations to improve ductility thereof so that the user's face can be fully covered. For example, the first soft material has a thickness of about 0.3 mm to 1.5 mm at a thin section **113** thereof and has a thickness of about 1 mm to 3 mm at a thick section **114** thereof.

In other words, both the hardness and thickness of the soft materials of the full face mask **110** in the present invention can be adjusted depending on practical needs so as to make the face-contacting first soft material region **111** soft and the second soft material region **112** at the mouth and nose areas harder for purpose of support, or thickness of a same material is varied to make the full face mask **110** tightly fit against the user's face profile.

The soft material used in the full face mask **110** may be of different soft materials, or are formed of soft materials having different hardness through overmolding or extrusion.

Areas of the full face mask **110** according to the present invention except for the area where the lens **130** is disposed are all formed of soft materials (i.e., the first soft material region **111** and the second soft material region **112**), and the total area of the soft materials of the full face mask **110** accounts for more than a half of the area of the viewing window formed by the lens **130.** In this way, the soft material having a softer sense of touch relative to the lens **130** prevent the user from discomfort when the water pressure impacts on the mask, so the comfort level in use can be improved. Meanwhile, the design of making the full face mask **110** have a large area of soft material can also make it convenient for the user to bend and store the mask.

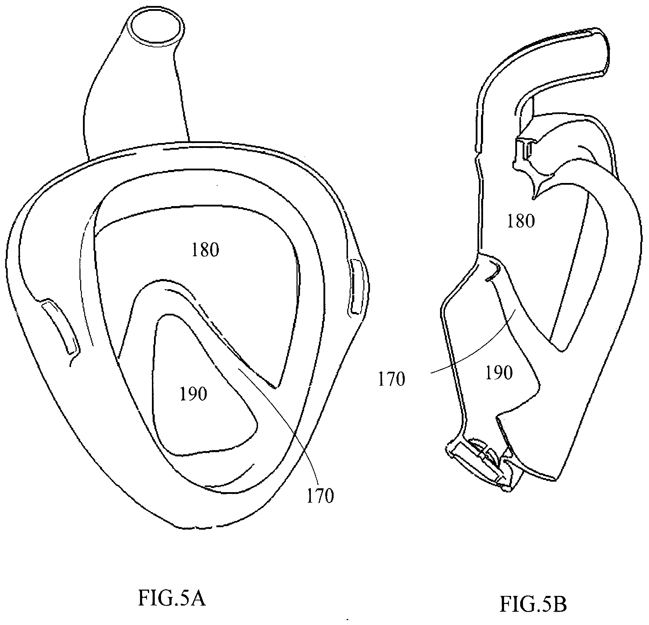

**FIG. 5A** is a simplified schematic view of the diving and snorkeling mask structure **10** according to the first embodiment of the present invention when being viewed from the back side, and **FIG. 5B** is a cross-sectional view of the diving and snorkeling mask structure of **FIG. 5A****.** In the present invention, when the full face mask **110** is being worn by the user, a viewing region **180** and a breathing region **190** can be defined between the full face mask and the user's cheek by a nasal bridge portion **170** of the full face mask **110** that extends towards the user's face. The viewing region **180** is located above the nasal bridge portion **170**, and the breathing region **190** is located below the nasal bridge portion **170.**

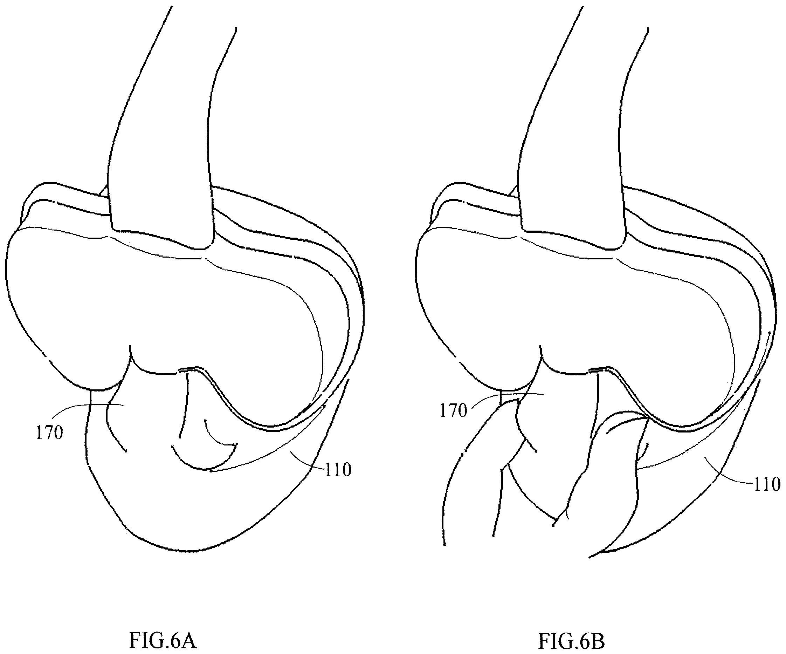

Further, as shown in **FIG. 6A** and **FIG. 6B**, with the complete soft material design of the full face mask **110** according to the present invention, the user in a diving sport can pinch the nasal bridge portion **170** through the soft full face mask **110** and perform an air blowing action to achieve an ear pressure balance. In contrast, in case of a conventional full face diving mask, the user is unable to pinch his or her nose through the mask because the mask is of a hard material design, so the user can only perform the swallow action to slightly adjust the ear pressure during the diving, and thus the ear pressure balancing effect is poor.

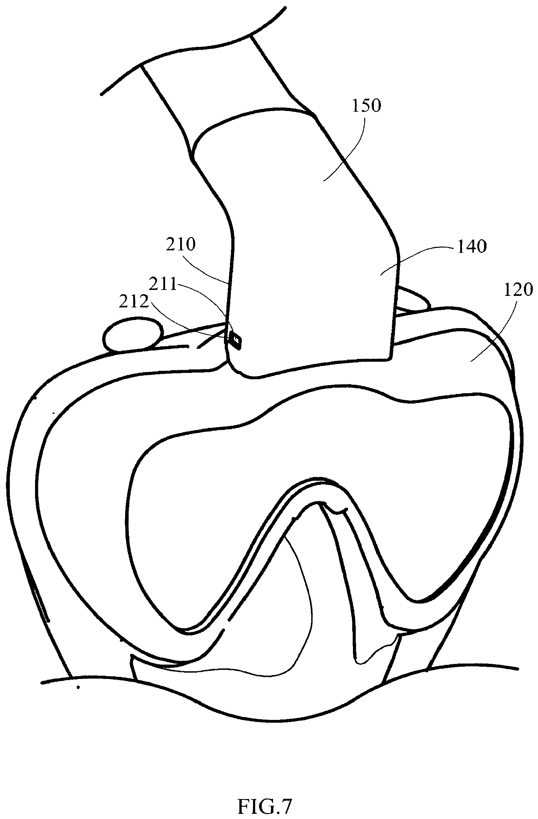

As shown in **FIG. 7**, the diving and snorkeling mask structure **10** of the present invention is further provided with a latching device **210.** In the aspect shown in the figure, the latching device **210** has a latch **211** and a groove **212**, the latch **211** is disposed at two sides of the joint **140,** and the groove **212** is disposed at two sides of the frame **120** so that the latch **211** can be engaged with the groove **212.** Therefore, when the latch **211** at the two sides of the joint **140** is engaged with the groove **212** at the two sides of the frame **120**, the latching device **210** is in a latched status to stabilize the joining of the joint **140**, the respiratory tube **150** and the full face mask **110,** thereby preventing the respiratory tube **150** from being damaged due to factors such as collision, accidental push, diving pressure or the like.

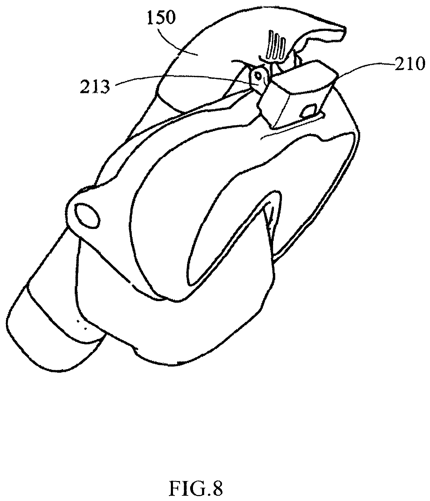

Moreover, as shown in **FIG. 8**, if the latching device **210** is in an unlatched status, then the respiratory tube **150** may be bent relative to the full face mask **110** via a connection element **213** so that the diving and snorkeling mask structure **10** of the present invention is easy to store. It shall be appreciated that, when the respiratory tube **150** is bent relative to the full face mask **110**, a connection relationship between the respiratory tube **150** and the full face mask **110** can always be ensured due to the arrangement of the connection element **213** (i.e., the respiratory tube **150** and the full face mask **110** cannot be separated into independent elements), thereby avoiding the risk of losing the respiratory tube **150.**

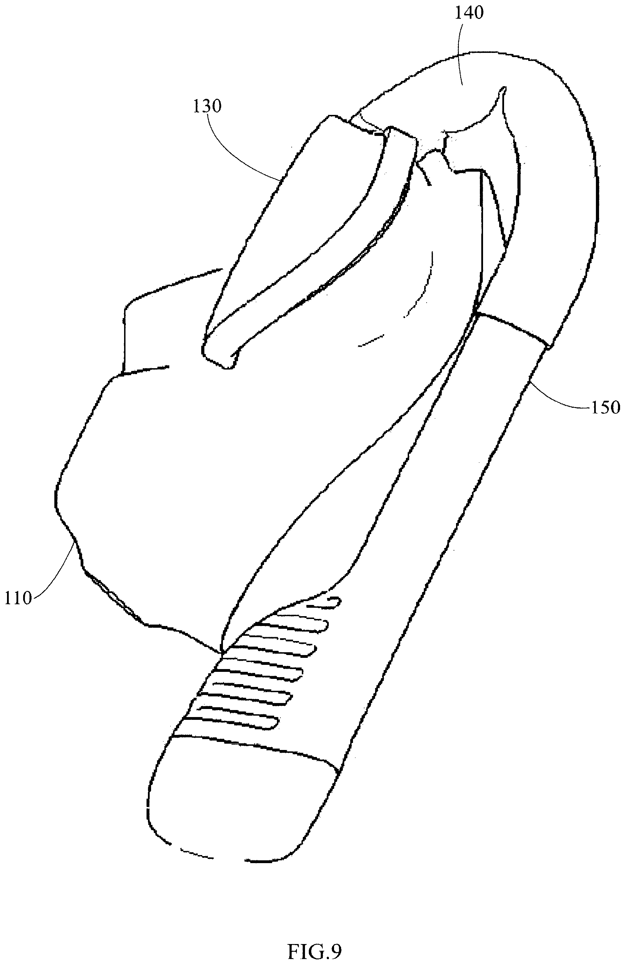

It shall be appreciated that, apart from securing and storing the respiratory tube **150** via the aforesaid latching device **210,** as shown in **FIG. 9**, the joint **140** may also be designed into a hose and formed integrally with the soft material regions to connect the respiratory tube **150** with the lens **130**, and the respiratory tube **150** is bent backwards relative to the lens **130** by means of the joint **140** in the form of a hose for the storage of the respiratory tube **150**, thereby also avoiding the risk of losing the respiratory tube **150.**

Referring back to **FIG. 2**, a water draining valve **220** may also be disposed in the full face mask **110** of the present invention and adjacent to the user's mouth.

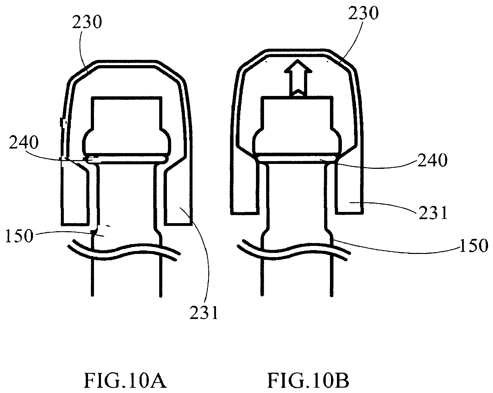

Moreover, as shown in **FIG. 10A** and **FIG. 10B**, a seal ring **240** may be disposed above the respiratory tube **150**, and the seal ring **240** is covered by a top cover **230.** In this way, when the user exhales and the air exhaled reaches at the top cover **230** through the respiratory tube **150**, the top cover **230** will be pushed upwards and then the protrusion **231** of the top cover **230** will abut against the seal ring **240** to form an air-tight status, so the air cannot be expelled from the top cover **230** and is forced to move downwards to be expelled through the water draining valve **220**, thereby draining the excess water in the mask to the outside via the water draining valve **220.**

What described above are the technical contents of the first embodiment of the diving and snorkeling mask structure 10 according to the present invention, and technical contents of a diving and snorkeling mask structure 20 according to a second embodiment of the present invention will be described hereinafter. For technical features of elements in the diving and snorkeling mask structure 20 of the second embodiment that are the same as or similar to those in the diving and snorkeling mask structure 10 of the first embodiment, reference may be directly made to the descriptions of the previous paragraphs.

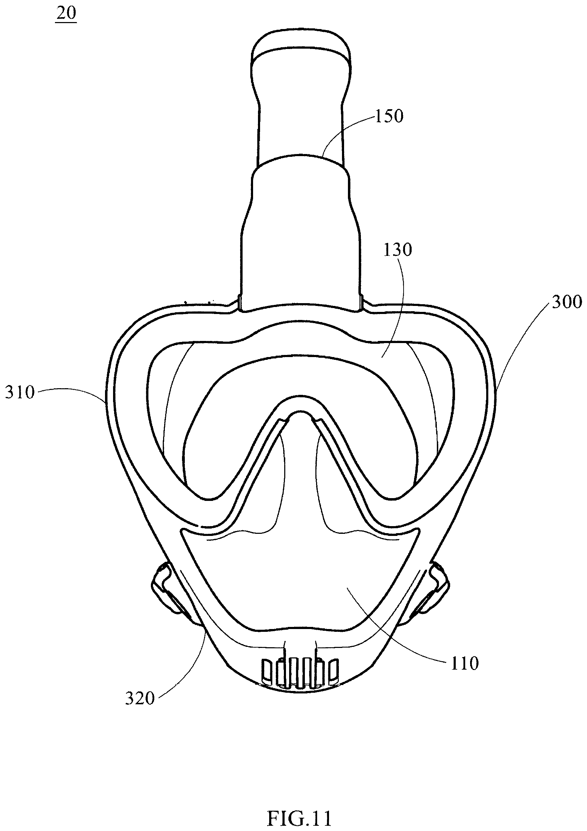

As shown in **FIG.** 11, the diving and snorkeling mask structure 20 of the second embodiment in the present invention mainly differs from the diving and snorkeling mask structure **10** of the first embodiment in that: the diving and snorkeling mask structure **20** further comprises an external hard frame **300**; and the external hard frame **300** may be made of hard materials such as plastic or acryl and is disposed around the full face mask **110** to stabilize the full face mask **110** made of soft materials.

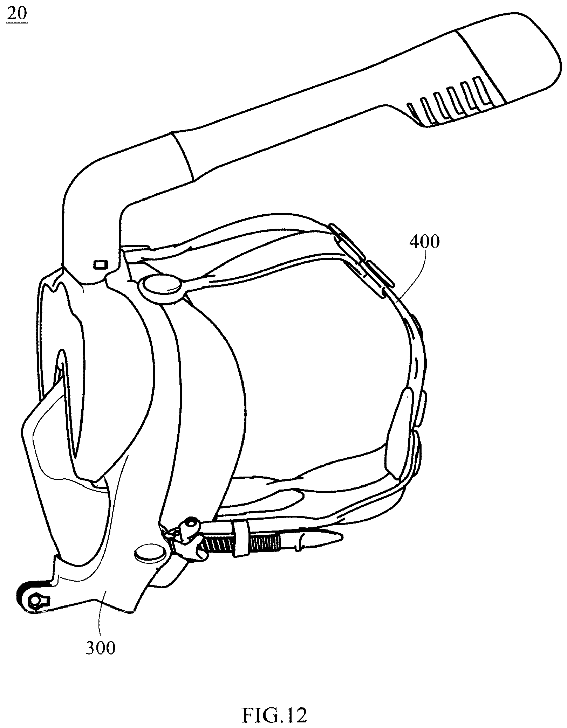

Please refer to **FIG. 12**, which is a schematic view of the diving and snorkeling mask structure **20** of the second embodiment when viewed from another angle. As shown in **FIG. 12**, an X-shaped elastic head strap **400** may be disposed at the back of the user's head and fixed to the external hard frame **300** (and it may also be fixed on the full face mask **110**). In this way, through the joining between the external hard frame **300** and the X-shaped elastic head strap **400**, the diving and snorkeling mask structure **20** can be more stable and is unlikely to come off when being worn.

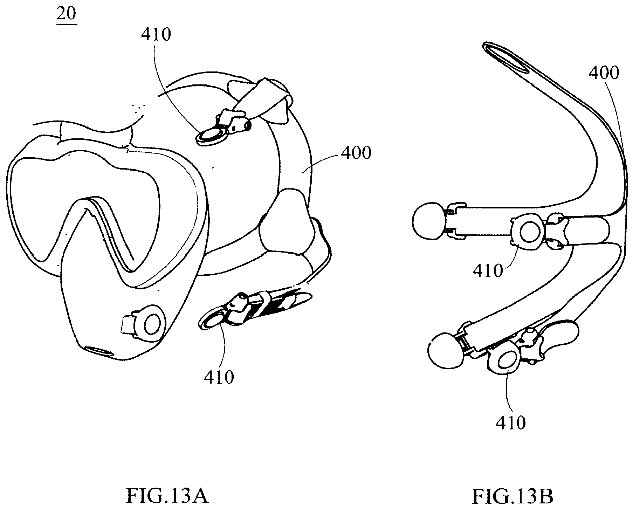

Additionally, as shown in **FIG. 13A** and **FIG. 13B**, four ends **410** of the elastic head strap **400** may also be provided as quick release buckles as in the securing belt **160** so as to be joined to the external hard frame **300** or the full face mask **110**, and in this way, the diving and snorkeling mask structure **20** can be put on or taken off more quickly. Moreover, although the elastic head strap **400** is X-shaped in this embodiment, the elastic head strap **400** may also be of other shapes in other embodiments. For example, the elastic head strap **400** may have a shape of a single bar (with only two ends) as shown in **FIG. 1**, and no limitation is made thereto.

Technical contents of a diving and snorkeling mask structure **30** according to a third embodiment of the present invention will be described hereinafter. For technical features of elements in the diving and snorkeling mask structure **30** of the third embodiment that are the same as or similar to those in the diving and snorkeling mask structures **10** and **20** of the first and the second embodiments, reference may be directly made to the descriptions of the previous paragraphs.

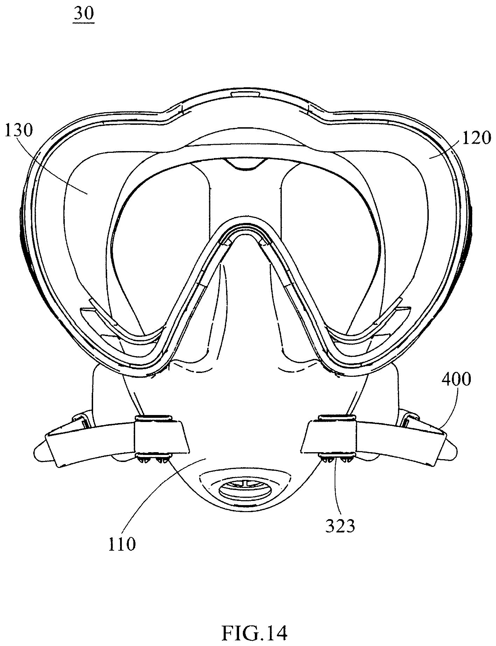

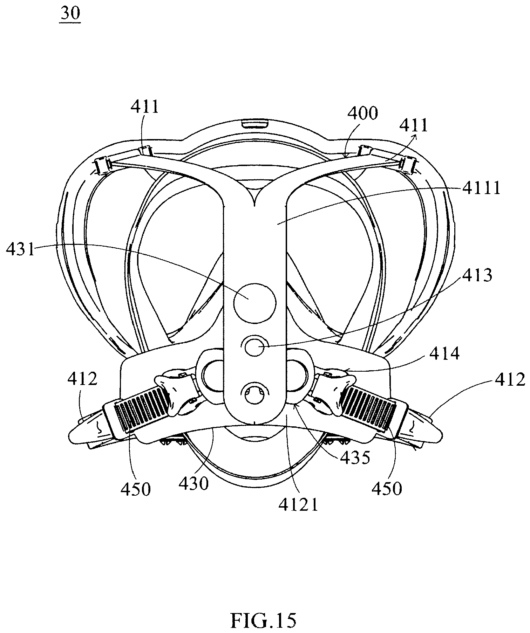

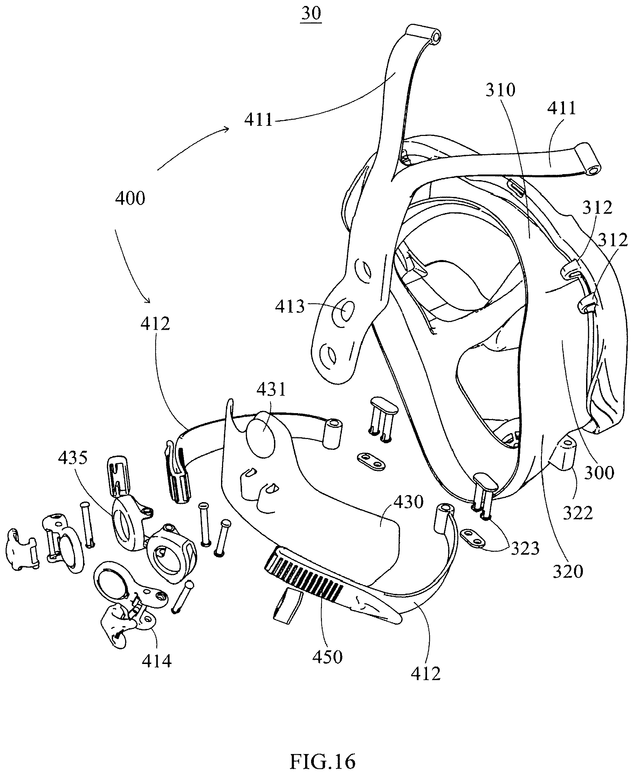

As shown in **FIG. 14** and **FIG. 15**, the diving and snorkeling mask structure 30 of the third embodiment in the present invention mainly differs from the diving and snorkeling mask structure **20** of the second embodiment in that: the elastic head strap **400** of the diving and snorkeling mask structure **30** may have a soft material base **430**, and the soft material base **430** is provided with a bump **431** and two quick release buckle bodies **435.** Referring to **FIG. 16** together, two upper ends **411** of the elastic head strap **400** together are formed into a Y shape, and tips **4111** of the upper ends **411** (i.e., tips distal from the mask) converge into a whole part that is provided with three holes **413** so that the user can select one among the holes **413** that fits the size of his/her head and engage the selected hole with the bump **431** on the soft material base **430.** Tips **4121** of two lower ends **412** of the elastic head strap **400** (i.e., tips distal from the mask) are each provided with a quick release buckle **414** to snap fit the quick release buckle bodies **435** on the soft material base **430.**

Additionally, each of the two lower ends **412** has a latch **450** through which the user can adjust the width of the elastic head strap **400.**

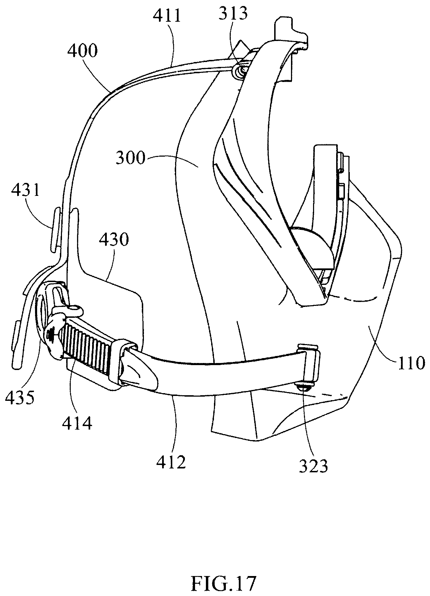

The elastic head strap **400** may also be joined to the full face mask **110** in other manners. For example, as shown in **FIG. 16** and **FIG. 17**, two flange holes **312** may be disposed at each of two sides of an upper portion **310** of the external hard frame **300** such that the two upper ends **411** of the elastic head strap **400** are disposed between the two flange holes **312,** and a supporting rod **313** passes through the two flange holes **312** and the two upper ends **411** so that the two upper ends **411** are joined to the two flange holes **312.** A hole **322** is disposed at each of two sides of a lower portion **320** of the external hard frame **300**, through which two connection buckles **323** respectively snap fit the two lower ends **412** of the elastic head strap **400**, thereby securing the elastic head strap **400.**

In this way, through the arrangement of the bump **431** and the quick release buckle **414**, the user can arbitrarily adjust the tightness of the elastic head strap **400** of this embodiment depending on actual needs, and the combination of the soft material base **430** and the elastic head strap **400** greatly improves the comfort level in use of the user.

Furthermore, adjusting structures such as the latch **450**, the quick release buckle **414** and the hole **413** are disposed at the back of the user's head, thereby making it more convenient to adjust the diving and snorkeling mask structure **30** to the size fitting the user's head.

Another additional advantage of providing the external hard frame **300** on the diving and snorkeling mask structures **20** and **30** in the present invention lies in that: an auxiliary device **500** can be hung on the external hard frame **300.**

For example, a goggle mask currently available on the market is only provided with a hard material region above the mask, so in order to satisfy special needs such as performing underwater photography, a mechanism will be installed above the mask and near the forehead of the user so that a miniature video camera is fixed thereto. However, because the location where the miniature video camera is disposed is not within the field of vision of the user, the operation thereof is not easy.

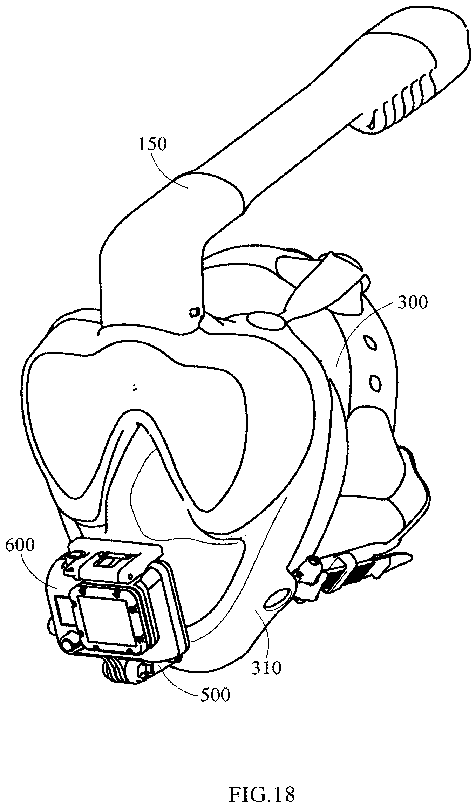

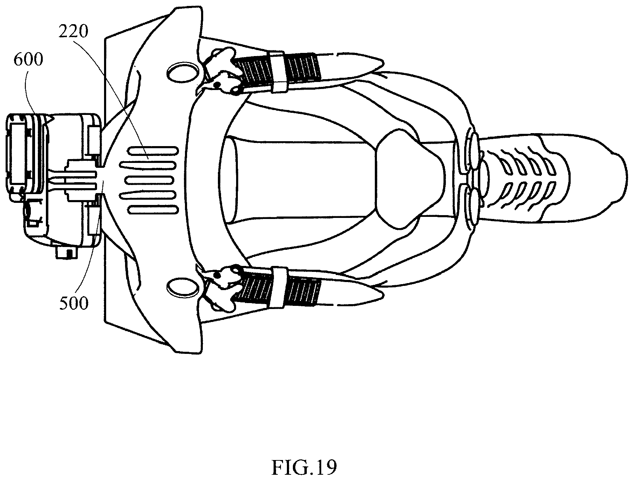

Referring to **FIG. 18** and **FIG. 19****,** the diving and snorkeling mask structures **20** or **30** of the present invention have an external hard frame **300**, so an auxiliary device **500** (e.g., a fixing mechanism) may be additionally disposed at a lower portion **310** of the external hard frame **300** so that a miniature video camera **600** is installed on the auxiliary device **500.** In this way, the miniature video camera **600** can be installed within the field of vision of the user, and meanwhile, the viewing angle of the user may be comparable with the range recorded by the miniature video camera **600**, and it is convenient for the user to operate.

Through the aforesaid arrangement, the diving and snorkeling mask structures **10**, **20** and **30** of the present invention can provide at least the following technical features:

1. except for the lens **130,** the diving and snorkeling mask structure **10** is all made of soft materials, so the user can achieve ear pressure balance under the water by pinching his/her nose through the mask made of soft materials; and the use of the soft materials greatly reduces the weight of the diving and snorkeling mask structure **10**, thereby providing the user with a goggle mask that is comfortable to wear and convenient to carry.

2. the periphery of the lens **130** of the diving and snorkeling mask structure **10** is made of soft materials, so the lens **130** can get closer to the user's face, thereby increasing the visible area of the viewing region **180** and providing the user with a broader filed of vision.

3. the special design of the latching device **210** can prevent the respiratory tube 150 from being bent due to the pressure during the diving; and the respiratory tube **150** can be directly bent for storage by means of the joint **140** in the form of a hose disposed between the respiratory tube **150** and the lens **130**, thereby preventing the loss of the respiratory tube **150.**

4. the arrangement of the water draining valve **220** and the top cover **230** can effectively drain the water from the mask to the outside.

5. the elastic head strap **400** may be disposed on the external hard frame 300 of the diving and snorkeling mask structures **20** and **30**, thereby achieving the effect of stabilizing the full face mask **110.**

6. the elastic head strap **400** is disposed in the form of a quick release buckle, thereby facilitating the putting on and the taking off of the diving and snorkeling mask structure.

7. the miniature video camera **600** may be disposed on the diving and snorkeling mask structures **20** and **30** by virtue of the special design of the external hard frame **300**, thereby achieving the effect of recording at any time.

The above disclosure is related to the detailed technical contents and inventive features thereof. People skilled in this field may proceed with a variety of modifications and replacements based on the disclosures and suggestions of the invention as described without departing from the characteristics thereof. Nevertheless, although such modifications and replacements are not fully disclosed in the above descriptions, they have substantially been covered in the following claims as appended.

### Names of Elements of the Drawings

- 10: diving and snorkeling mask structure
- 110: full face mask
- 111: first soft region
- 112: second soft region
- 113: thin section
- 114: thick section
- 120: frame
- 130: lens
- 140: joint
- 150: respiratory tube
- 160: securing belt
- 161: side buckle element
- 170: nasal bridge portion
- 180: viewing region
- 190: breathing region
- 210: latching device
- 211: latch
- 212: groove
- 213: connection element
- 220: water draining valve
- 230: top cover
- 231: protrusion
- 240: seal ring
- 300: external hard frame
- 310: upper portion
- 312: flange hole
- 313: supporting rod
- 320: lower portion
- 322: hole
- 323: connection buckle
- 400: elastic head strap
- 410: end
- 411: upper end
- 4111: tip
- 412: lower end
- 4121: tip
- 413: hole
- 414: quick release buckle
- 430: soft material base
- 431: bump
- 435: quick release buckle body
- 450: latch
- 500: auxiliary device
- 600: miniature video camera

## Claims

1. A diving and snorkeling mask structure adapted to be worn on a user's head, comprising:
a full face mask, comprising a first soft material region and a second soft material region connected with each other;
a frame, combined with the second soft material region of the full face mask;
at least one lens, disposed in the frame;
a joint, disposed on the full face mask and adjacent to an upper side of the frame;
a respiratory tube, disposed on the joint and establishing the air communication with the full face mask via the joint; and
at least one securing belt, comprising a side buckle element adapted to snap fit the full face mask.

2. The diving and snorkeling mask structure according to Claim 1, wherein the soft material of the first soft material region has a hardness smaller than that of the soft material of the second soft material region.

3. The diving and snorkeling mask structure according to Claim 2, wherein a total area of the first soft material region and the second soft material region is larger than a half of a viewing window area of the at least one lens.

4. The diving and snorkeling mask structure according to Claim 1, wherein the first soft material region and the second soft material region are of a same material.

5. The diving and snorkeling mask structure according to Claim 1, further comprising a water draining valve disposed at a lower end of the full face mask and adjacent to the user's mouth.

6. The diving and snorkeling mask structure according to Claim 1, further comprising a latching device, wherein the latching device has a connection element as well as a latch and a groove engaged with each other, the connection element is adapted to make the respiratory tube bendable with respect to the frame, and the latch and the groove are disposed on the joint and the frame respectively.

7. The diving and snorkeling mask structure according to Claim 1, further comprising an external hard frame disposed around the full face mask.

8. The diving and snorkeling mask structure according to Claim 7, wherein at least one elastic head strap is disposed on the external hard frame.

9. The diving and snorkeling mask structure according to Claim 7, wherein an auxiliary device is disposed at a lower portion of the external hard frame to fix a miniature video camera.

10. The diving and snorkeling mask structure according to Claim 1, wherein the side buckle element snap fits the full face mask in the form of a quick-release buckle.

11. The diving and snorkeling mask structure according to Claim 1, wherein the at least one securing belt has a plurality of latches for adjusting the length of the at least one securing belt.

12. The diving and snorkeling mask structure according to Claim 1, wherein the respiratory tube further comprises a top cover and a seal ring, the top cover is movably disposed at an end of the respiratory tube, the seal ring is disposed around a periphery of the end, and the top cover has a protrusion so that, when the top cover moves upwards relate to the respiratory tube, the protrusion abuts against the seal ring.
